# EUROPÄISCHE PATENTSCHRIFT

(11) **EP 3 206 843 B1**
(45) Veröffentlichungstag und Bekanntmachung des Hinweises auf die Patenterteilung: **25.11.2020**
(21) Anmeldenummer: 15788343.0
(22) Anmeldetag: 14.10.2015
(51) Int. Cl.: B25J 15/00, B23B 39/20, B25J 9/12

(54) **WERKZEUGWECHSELVORRICHTUNG FÜR MANIPULATOREN**
TOOL CHANGING DEVICE FOR MANIPULATORS
DISPOSITIF DE CHANGEMENT D'OUTIL POUR MANIPULATEURS

(30) Priorität: 16.10.2014 DE 202014104946 U
(43) Veröffentlichungstag der Anmeldung: 23.08.2017
(73) Patentinhaber: KUKA Systems GmbH, 86165 Augsburg (DE)
(72) Erfinder: ZUNKE, Richard, 86150 Augsburg (DE); STOCKSCHLÄDER, Julian, 86152 Augsburg (DE)
(74) Vertreter: Ernicke, Klaus Stefan
(86) Internationale Anmeldenummer: PCT/EP2015/073747
(87) Internationale Veröffentlichungsnummer: WO 2016/059095

(56) Entgegenhaltungen:
- EP-A1- 2 347 831
- DE-A1- 3 605 590
- US-A- 4 167 362

## Beschreibung

Die Erfindung betrifft eine Werkzeugwechselvorrichtung für Industrieroboter oder Leichtbauroboter, eine mit einer solchen Werkzeugwechselvorrichtung ausgestattete Bearbeitungsvorrichtung, sowie ein Verfahren zum Betrieb eines mit einer solchen Werkzeugwechselvorrichtung ausgestatteten Manipulators.

Es ist in der Praxis bekannt, Werkzeugwechselvorrichtungen mit mehreren Werkzeugen vorzusehen, welche abwechselnd in eine aktive Position bewegbar sind. Bei den bisher bekannten Werkzeugwechselvorrichtungen sind separate Antriebe erforderlich, um einen Werkzeugwechsel durchzuführen.

Aus der DE 201 22 326 U1 ist eine Handbohrmaschine mit einem Revolverkopf bekannt. Es sind zwei angetriebene Wellen am Revolverkopf vorgesehen, die einzeln in eine Betriebsstellung gebracht werden können. An dem Revolverkopf sind zwei Verriegelungskerben vorgesehen, die beim Drehen des Revolverkopfes mitbewegt werden. Eine federbelastet Sperrklinke greift in die Verriegelungskerbe ein, wenn sich eine der Wellen in der Betriebsstellung befindet. Die Riegelwandungen der Verriegelungskerbe sowie die seitlichen Wandungen der Sperrklinke sind senkrecht zur Bewegungsrichtung der Sperrklinke orientiert. Wenn die Sperrklinke in die Verriegelungskerbe eingeschoben ist, blockiert sie ein Verdrehen des Revolverkopfes durch Formschluss zwischen den Riegelwandungen und den seitlichen Wandungen der Sperrklinke, wobei eine Kraft in Drehrichtung keine resultierende Kraft in Öffnungsrichtung der Sperrklinke erzeugt. Durch die gegenseitige Anlage der Wandungen wird somit eine unbegrenzte Haltekraft erzeugt. Die Sperrklinke kann nur durch einen manuellen Eingriff aus der Verriegelungskerbe entfernt werden, um eine Drehung des Revolverkopfes zu ermöglichen.

Aus der DE 600 07 243 T2 ist eine Werkzeugmaschine mit einer automatischen Werkzeugwechselvorrichtung bekannt, die einen Revolverkopf aufweist. Dieser Revolverkopf wird durch einen separaten Antrieb verdreht.

Aus der DE 36 05 490 A1 ist eine Werkzeugwechselvorrichtung für Industrieroboter bekannt, die einen schräg zur Mittelachse drehbaren Revolverkopf aufweist, sowie eine druckmittelgesteuerte Rastvorrichtung, die das Werkzeug in einer Rastposition hält.

Aus der 4 167 362 A ist eine für Industrieroboter oder Leichtbauroboter ungeeignete Werkzeugwechselvorrichtung bekannt, die eine Rastvorrichtung aufweist, die das Werkzeug mit einer begrenzten Haltekraft in einer Rastposition hält.

Es ist Aufgabe der vorliegenden Erfindung, eine verbesserte Werkzeugwechselvorrichtung für Industrieroboter oder Leichtbauroboter aufzuzeigen, die ohne einen separaten Antrieb auskommt und dennoch einen voll automatischen Werkzeugwechsel ermöglicht.

Die Erfindung löst diese Aufgabe mit einer Werkzeugwechselvorrichtung gemäß Anspruch 1.

Die Werkzeugwechselvorrichtung gemäß der vorliegenden Offenbarung umfasst ein Gehäuse und eine Antriebswelle zur Anbringung an einer Manipulatorhand eines Industrieroboters, insbesondere eines Leichtbauroboters. Sie umfasst ferner einen Werkzeugrevolver mit einem drehbar am Gehäuse gelagerten Revolverträger, an dem zwei oder mehr Werkzeuge angeordnet sind. Die Werkzeuge können antreibbar oder nicht antreibbar sein. Gemäß einer ersten bevorzugt Ausführung ist mindestens eines dieser Werkzeuge und sind bevorzugt alle Werkzeuge über eine jeweilige Werkzeugwelle antreibbar.

Der Revolverträger ist um eine schräg zur Antriebswelle verlaufende Revolverachse drehbar, um abwechselnd jeweils ein Werkzeug in eine aktive Position zu bewegen, in welcher die Werkzeugwelle des Werkzeugs kollinear zur Antriebswelle ausgerichtet ist.

In der aktiven Position kann ein Werkzeug über die Antriebswelle betrieben, insbesondere gedreht werden, um eine Werkstückbearbeitung auszuführen. Das Werkzeug kann dabei bevorzugt mit seiner Werkzeugwelle und der Antriebswelle kollinear zur letzten Bewegungsachse, insbesondere der siebten Bewegungsachse des Manipulators ausgerichtet sein. Diese Ausrichtung ist sowohl für die Programmierung und Bewegungssteuerung als auch für die Kraftübertragung und räumliche Erreichbarkeit durch den Manipulator optimal. Auch nicht angetriebene Werkzeuge werden bevorzugt in die aktive Position gebracht, um eine Bearbeitung durchzuführen. Die aktive Position weist besondere Vorteile in Hinblick auf die Programmierung und Steuerung des Manipulators auf.

Durch die Schrägstellung der Revolverachse gegenüber der Antriebswelle werden diejenigen Werkzeuge, die sich in passiven Positionen befinden, aus dem Wirkbereich des aktiven Werkzeugs herausgedreht. Es kann somit eine bessere Zugänglichkeit des aktiven Werkzeugs zu schwer erreichbaren Bearbeitungspunkten an einem Werkstück geschaffen werden. Andererseits können manche (nicht angetriebene) Werkzeuge auch in der passiven Position für eine Bearbeitung verwendet werden.

Die Werkzeugwechselvorrichtung gemäß der vorliegenden Offenbarung ist vielseitig einsetzbar. Sie ist mit einfachen Mitteln und somit kostengünstig herzustellen und bietet je nach Ausstattung der Werkzeuge eine große Anwendungsvielfalt.

Die Werkzeugwechselvorrichtung wird bevorzugt in einem Bearbeitungssystem mit einem mehrachsigen Manipulator, insbesondere einem Industrieroboter oder Leichtbauroboter betrieben. Die Bearbeitungsvorrichtung weist eine Steuerung auf, die dazu ausgebildet ist, den Manipulator zur Durchführung eines Werkzeugwechsels derart anzusteuern, dass ein Werkzeug im Wesentlichen tangential zur Rotationsebene des Revolverträgers gegen ein externes Objekt bewegt wird. Die Werkzeugwechselvorrichtung wird so an dem externen Objekt entlanggeführt, dass ein Werkzeug oder ein Teil des Revolvers an dem Objekt hängen bleibt, was zu einer Verdrehung des Revolverträgers führt. Die Verdrehung wird bevorzugt so weit ausgeführt, bis ein nächstes und insbesondere ein gewünschtes nächstes Werkzeug in der aktiven Position ist.

Die Werkzeugwechselvorrichtung weist ferner eine Rastvorrichtung auf, die ein Werkzeug in der aktiven Position hält, wobei die Rastvorrichtung das Werkzeug mit einer begrenzten Haltekraft in einer Rastposition hält. Diese begrenzte Haltekraft kann für einen Werkzeugwechsel durch die Bewegung des Manipulators überwunden werden. Alternativ oder zusätzlich kann die Rastvorrichtung eine zusätzliche und/oder überlagerte Stellkraft auswirken, um den Revolverträger in eine Vorzugsposition zu verdrehen, insbesondere in eine solche Stellung, in der eines der Werkzeuge in der aktiven Position ist. Mit anderen Worten verdreht die Rastvorrichtung den Revolverträger aus einer Zwischenposition selbsttätig in die nächstgelegene Vorzugsposition oder unterstützt eine solche Drehung kräftemäßig. Diese unterstützende Stellkraft wirkt sich ggfs. bis zum Erreichen eines Kraft-Totpunktes entgegen der Richtung der Verdrehung und ab dem Überschreiten des Kraft-Totpunktes entlang der Richtung der Verdrehung aus. Der Kraft-Totpunkt kann an einer beliebigen Stelle zwischen zwei Vorzugspositionen gesetzt sein.

Die Haltekraft der Rastvorrichtung wirkt einer Verdrehung des Revolverkopfes entgegen, d.h. sie ist tangential zum Umfang des Revolverkopfes orientiert. Die Beschränkung der Haltekraft ist bevorzugt auf einen bestimmten Kraft-Schwellenwert festgelegt oder einstellbar, insbesondere zur Erzeugung eines einstellbaren Maximalwertes für die Haltekraft.

In der nachfolgenden Beschreibung, den beigefügten Zeichnungen und den Unteransprüchen sind weitere vorteilhafte Ausbildungen der Erfindung angegeben.

Die Erfindung ist in den Zeichnungen beispielsweise und schematisch dargestellt. Es zeigen:
- Figuren 1, 2, 3:: perspektivische Darstellungen einer Werkzeugwechselvorrichtung mit drei, zwei oder vier Werkzeugen;
- Figur 4:: eine leicht außermittige Querschnittsdarstellung einer bevorzugten Ausführungsvariante der Werkzeugwechselvorrichtung mit drei Werkzeugen und einer Klauenkupplung;
- Figur 5:: eine vergrößerte Ausschnittdarstellung der Kupplung aus Figur 4;
- Figur 6:: eine bevorzugte Ausführungsvariante eines Revolverträgers;
- Figur 7:: eine Seitenansicht einer Werkzeugwechselvorrichtung mit vier Werkzeugen;
- Figur 8:: eine Teilschnittdarstellung gemäß Schnittlinie (VIII - VIII aus Figur 7)
- Figur 9:: eine perspektivische Darstellung eines Leichtbauroboters zur Aufnahme und Führung einer erfindungsgemäßen Werkzeugwechselvorrichtung;
- Figuren 10, 11, 12:: Eine Prinzipdarstellung und zugehörige Kräfteverlaufsdiagramme für eine Rastvorrichtung;
- Figur 13:: eine Schnittdarstellung einer Ausführungsvariante der Werkzeugwechselvorrichtung zur Aufnahme nicht angetriebener Werkzeuge.

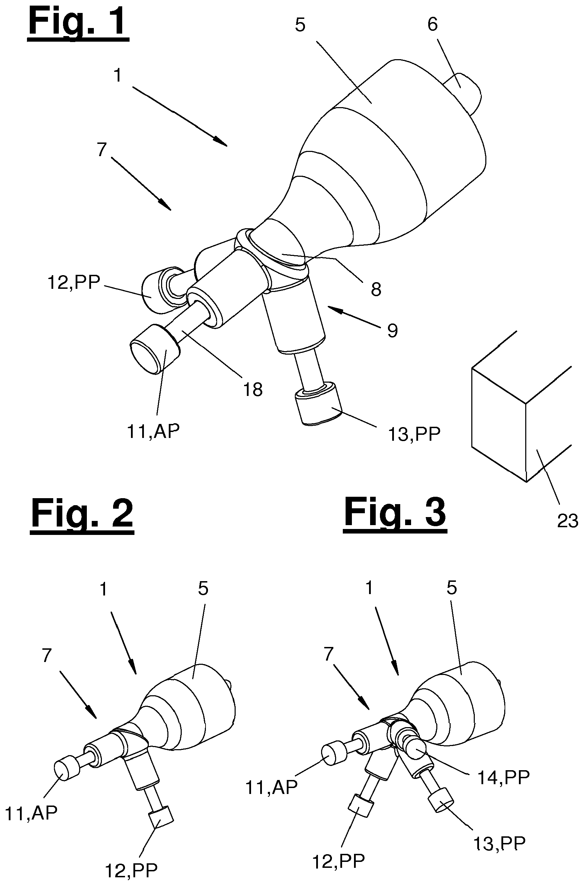

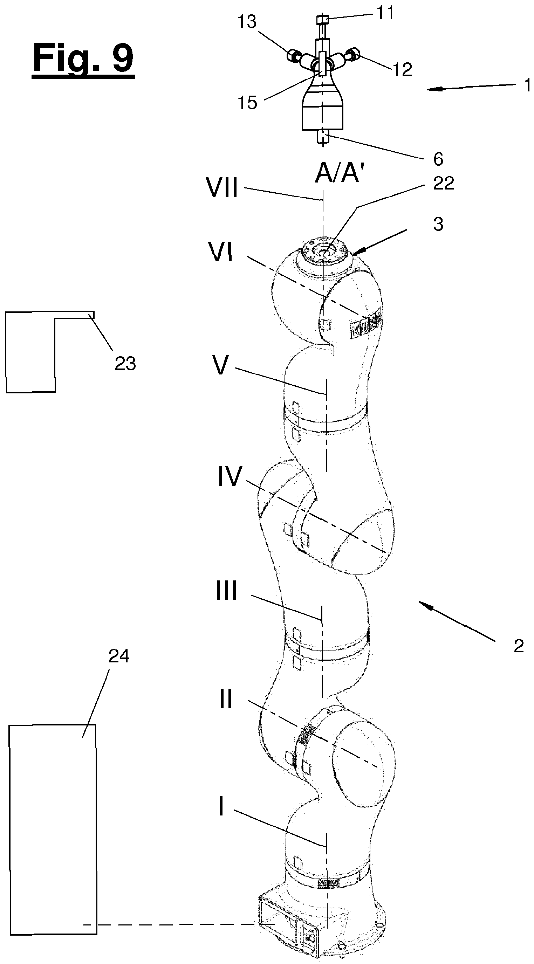

Figur 1 zeigt eine bevorzugte Ausführungsvariante der Werkzeugwechselvorrichtung (1) gemäß der vorliegenden Offenbarung. Diese weist ein Gehäuse (5) auf, über das sie an einer Manipulatorhand eines Industrieroboters oder eines Leichtbauroboters angeschlossen werden kann. An einer dorsalen Seite des Gehäuses (5), d.h. an einer vom Werkzeugeingriff wegweisenden Seite, ist eine Antriebswelle (6) aus dem Gehäuse (5) herausgeführt. Diese Antriebswelle (6) kann in eine entsprechende Wellenaufnahme (22) an der Manipulatorhand eingeführt werden (vgl. Figur 9), um eine treibende Verbindung zwischen dem Manipulator (2) und der Werkzeugwechselvorrichtung (1) herzustellen.

Alternativ kann eine beliebige andere Form der Kraftübertragung vom Manipulator (2) zur Werkzeugwechselvorrichtung (1) vorgesehen sein. Beispielsweise kann an der Manipulatorhand ein Adapter angebracht sein, der einen Motor und eine vom Motor antreibbare Wellenaufnahme beinhaltet. Der Motor in dem Adapter kann über eine gängige Betriebsmittelverbindung an die Manipulatorhand angebunden sein, wobei die Betriebsmittelverbindung zumindest eine Energiezufuhr für den Motor in dem Adapter bereitstellt. Ferner kann alternativ an der Werkzeugwechselvorrichtung (1) ein eigener Motor, insbesondere ein elektrischer Motor, zum direkten Antrieb der Antriebswelle und/oder einer Werkzeugwelle (6) vorgesehen sein, der bevorzugt von dem Manipulator (2) mit Energie versorgt wird und über dessen Steuerung (24) betrieben wird.

Am distalen, also vorderseitigen, Ende des Gehäuses (5) ist ein Werkzeugrevolver (7) mit den mehreren Werkzeugen (11, 12, 13) angeordnet. Dieser weist einen drehbar am Gehäuse (5) gelagerten Revolverträger (9) auf, an dem die zwei oder mehr Werkzeuge (11, 12, 13) angeordnet sind. Bevorzugt ist zumindest eines der Werkzeuge (11, 12, 13) über eine Werkzeugwelle (18) antreibbar. Eine andere Ausführungsvariante zur Aufnahme von ausschließlich nicht angetriebenen Werkzeugen wird am Ende der Beschreibung erläutert. Die nachfolgende Beschreibung ist entsprechend sinngemäß auf die Ausführungsvariante mit ausschließlich nicht-angetriebenen Werkzeugen übertragbar.

Der Revolverträger (9) ist um eine schräg zur Antriebswelle (6) verlaufende Revolverachse (R) drehbar, um abwechselnd jeweils ein Werkzeug (11, 12, 13) in eine aktive Position (AP) zu bewegen, in der die Werkzeugwelle (18) kollinear zur Antriebswelle (6) ausgerichtet ist. In dieser aktiven Position (AP) kann eine Drehbewegung der Antriebswelle (6) auf die Werkzeugwelle (18) übertragen werden, um das Werkzeug (11) in der aktiven Position zu betreiben. Die anderen Werkezuge (12, 13, 14) befinden sich in passiven Positionen (PP). Durch eine Drehung des Revolverträgers (9) kann ein Werkzeugwechsel ausgeführt werden, bei dem ein gewünschtes Werkzeug (12, 13, 14) in die aktive Position (AP) gebracht wird.

Die Werkzeugwechselvorrichtung gemäß der vorliegenden Offenbarung umfasst bevorzugt zwei, drei oder vier Werkzeuge an einem Revolverträger (9). In den Figuren 1 bis 3 sind diese Varianten in bevorzugten Ausführungsformen dargestellt.

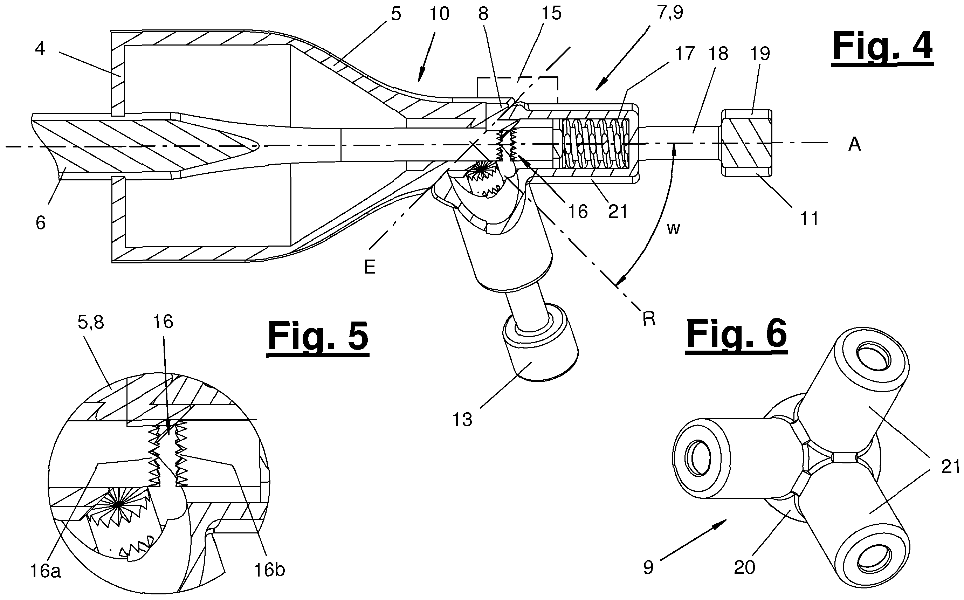

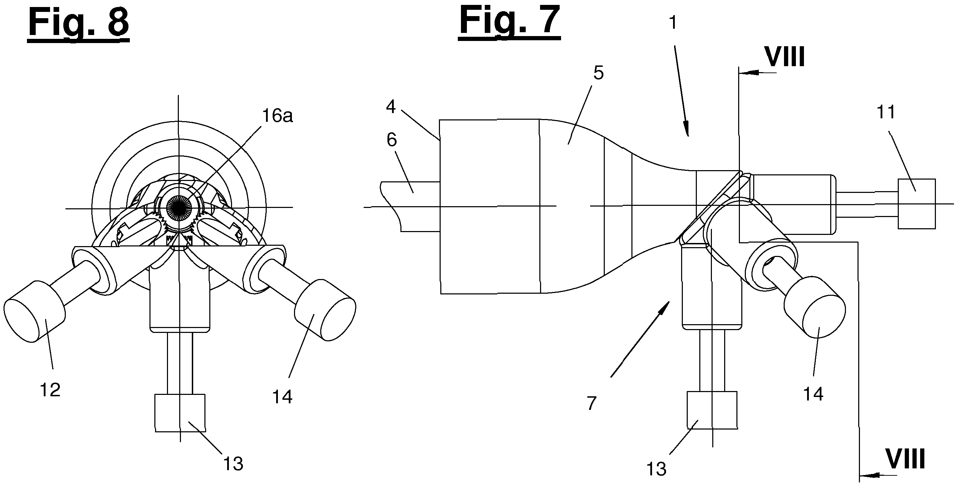

Die Werkzeugwechselvorrichtung (1) weist bevorzugt eine Kupplung (16) auf, durch die die Werkzeugwelle (18) des in der aktiven Position (AP) befindlichen Werkzeugs (11) mit der Antriebswelle (6) treibend verbindbar ist. In Figuren 4, 5 und 8 ist eine bevorzugte Ausführungsvariante einer solchen Kupplung (16) in Form einer Klauenkupplung dargestellt.

Die Kupplung (16) kann jedoch beliebig ausgebildet sein. Sie kann insbesondere als formschlüssige oder reibschlüssige Kupplung ausgebildet sein. In dem gezeigten Beispiel handelt es sich um eine Klauenkupplung mit einer Stirnverzahnung. Eine Antriebsklaue (16a) der Kupplung (16) ist am distalen Ende der Antriebswelle (6) angeordnet. Eine damit korrespondierende Abtriebsklaue (16b) ist am dorsalen Ende der Werkzeugwelle (18) angeordnet.

Ein Schließen der Kupplung (16) kann auf beliebige Weise erfolgen. In den gezeigten Beispielen ist eine Werkzeugwelle (18) oder zumindest die mit der Werkzeugwelle (18) drehfest verbundene Antriebsklaue (16b) in Axialrichtung des Werkzeugs verschieblich angeordnet und kann zum Schließen der Kupplung in Richtung der Antriebsklaue (16a) bewegt werden. Alternativ kann eine andere Form der Beweglichkeit vorgesehen sein.

In dem Beispiel gemäß Figur 4 ist die gesamte Werkzeugwelle (18) in Richtung der Antriebsachse (A) verschieblich gelagert. Sie wird durch ein elastisches Rückstellelement (17) in einer von der Antriebswelle (6) entkoppelten Position gehalten. Hierfür ist in dem gezeigten Beispiel eine Zugfeder vorgesehen.

Um die Kupplung (16) zu schließen kann das in der aktiven Position (AP) befindliche Werkzeug (11) durch den Manipulator (2) gegen ein externes Objekt (23) bewegt werden, wobei die Werkzeugwelle (18) in Richtung zum Gehäuse (5) hin verschoben wird. Es wird durch den Kontakt mit dem externen Objekt (23) eine Druckkraft in Richtung der Werkzeugwelle (18) aufgebracht, die das Einschieben der Welle (18) sowie der Abtriebsklaue (16b) bewirkt. Bei einer solchen Ausführung sind zum Schließen der Kupplung kein separater Antrieb und auch kein separates Angriffselement zur Auslösung der Schließbewegung erforderlich. Hierdurch kann die Werkzeugwechselvorrichtung besonders schlank ausgeführt werden, was die Zugänglichkeit des aktiven Werkzeugs an ein Werkstück maximiert.

Die Kupplung (16) kann durch beliebige Mittel in der geschlossenen Position gehalten werden. Beispielsweise kann eine Reaktionskraft, die beim Einsatz des Werkzeugs an einem Werkstück erzeugt wird, dauerhaft die Rückstellkraft der Zugfeder überwinden und die Kupplung (16) in der geschlossenen Position halten. In diesem Fall ist es günstig, zunächst das aktive Werkzeug (11) in Richtung der Werkzeugwelle (18) auf ein Werkstück aufzusetzen, um die Kupplung (16) zu schließen. Anschließend kann das Werkzeug (11) zur Durchführung einer Bearbeitung angetrieben werden. Alternativ kann das Werkzeug (11) auf eine separate Auflagefläche aufgesetzt und in Betrieb genommen werden, um dann anschließend zum Werkstück geführt zu werden.

Wiederum alternativ kann die Kupplung (16) in einer ersten Drehrichtung selbstschließend sein. Dies kann beispielsweise dadurch erreicht werden, dass ineinandergreifende Haken (nicht dargestellt) an den Klauen (16a, 16b) angeordnet sind. Wenn die Antriebswelle (6) in Richtung zum Gehäuse (5) eingeschoben und in der für die Bearbeitung vorgesehenen Richtung gedreht wird, verbinden sich die Haken und schließen die Kupplung (16). Wird das Werkzeug in der entgegengesetzten Richtung gedreht, können die Haken entsprechend wieder auseinandergleiten, sodass sich die Kupplung (16) öffnet, und die Werkzeugwelle (18) durch das Rückstellelement zurückbewegt wird.

Wiederum alternativ kann eine Lagesicherung (15) vorgesehen sein, welche die Kupplung (16) in der geschlossenen Position hält, sobald diese einmal aktiviert wurde (Kupplungs-Lagesicherung). Eine solche Lagesicherung kann beispielsweise durch einen Schnappmechanismus gebildet sein. Die Lagesicherung (15) ist in den Zeichnungen lediglich schematisch dargestellt.

Sie kann beliebig ausgebildet sein. Die Lagesicherung wird bevorzugt durch eine von der Rastvorrichtung separierte Funktionseinheit gebildet, beispielsweise durch einen separaten Schnappmechanismus, sodass ein Öffnen oder Schließen der Kupplung bzw. eine Verriegelung der Kupplung in mindestens einer dieser Positionen unabhängig von einer Fixierung des Revolverträgers in einer aktiven Position erfolgt. Dies ist vorteilhaft, weil dann gemäß dem unten erläuterten Vorgehen ein Leichtbauroboter separate und unterscheidbare Reaktionskräfte erfassen kann, die einerseits repräsentativ für eine Betätigung der Lagesicherung und andererseits für eine Betätigung der Rastvorrichtung sind.

Die Lagesicherung (15) kann als alternative oder zusätzliche Funktion ein Werkzeug (11, 12, 13, 14) in der aktiven Position (AP) fixieren und gegen ein Verdrehen des Revolverträgers sichern (Revolverträger-Lagesicherung). Dies kann insbesondere durch ein nicht überwindbares Blockieren der Verdrehung des Revolverträgers (9) geschehen. Ein solches Sichern kann auch bei einer Werkzeugwechselvorrichtung mit ausschließlich nicht-angetriebenen Werkzeugen vorgesehen sein. Eine Revolverträger-Lagesicherung ist bevorzugt zusätzlich zu einer Rastvorrichtung (10) vorgesehen. Bei einem Lösen der Revolverträger-Lagesicherung wird die unüberwindbare Blockade aufgehoben und somit ein Verdrehen des Revolverträgers grundsätzlich ermöglicht, wobei jedoch weiterhin die begrenzte Haltekraft der Rastvorrichtung (10) das Verdrehen des Revolverträgers beschränkt. Erst wenn diese begrenzte Haltekraft überwunden wird, kann der Revolverträger aus der momentanen Position in die nächste Position verdreht werden.

Bevorzugt kann die Lagesicherung (15) gleichzeitig ein Werkzeug (11, 12, 13, 14) in der aktiven Position (AP) sichern und die Kupplung (16) geschlossen halten. Mit anderen Worten ist die Lagesicherung (15) bevorzugt gleichzeitig eine Kupplungs-Lagesicherung und eine Revolverträger-Lagesicherung. Besonders bevorzugt kann die Lagesicherung nur in eine Betriebsstellung, in der sie die Drehung des Revolverträgers blockiert und/oder die Kupplung in der geschlossenen Position hält, gebracht werden, wenn einerseits der Revolverträger in eine aktive Position verdreht worden ist und andererseits die Kupplung geschlossen ist. Alternativ kann bei einer Aktivierung der Lagesicherung (wenn der Revolverträger in eine aktiven Position verdreht ist) die Kupplung geschlossen und in der geschlossenen Position gehalten werden.

Figur 6 zeigt eine bevorzugte Ausführungsvariante eines Revolverträgers (9). Dieser weist eine Basisplatte (20) und zwei, drei oder vier daran angeordnete Aufnahmen (21) auf, in die die Werkzeuge (11, 12, 13, 14) einsetzbar sind. Die Basisplatte (20) ist bevorzugt drehbar an einer Revolverbasis (8) am Gehäuse (5) gelagert. Alternativ oder zusätzlich kann ein Wellenbolzen (nicht dargestellt) vorgesehen sein, auf dem der Revolverträger (9) drehbar gelagert ist. Der Wellenbolzen ist derart anzuordnen, dass er den Durchgriff der Kupplung (16) bzw. der Antriebswelle (6) und einer Werkzeugwelle (18) nicht behindert.

Die Basisplatte (20) ist bevorzugt in Form einer Haube ausgebildet, insbesondere mit einer kugeligen, ellipsoiden, konischen oder pyramidalen Grundform oder in Form eines Kugel-, Kegel- oder Pyramidenstumpfes. Auf der Mantelfläche der Basisplatte (20) sind die zwei oder mehr Aufnahmen (21) bevorzugt im Wesentlichen senkrecht zur Mantelfläche angesetzt. Die Aufnahmen (21) weisen bevorzugt eine in Richtung der aufzunehmenden Werkzeugwelle länglich gestreckte hohe Form auf. In einer Aufnahme (21) können bevorzugt zwei zueinander beabstandete Drehlager aufgenommen sein, über welche die Reaktionskräfte des jeweiligen Werkzeugs auf die Aufnahme (21) und von dort weiter über die Basisplatte (20) bis zum Gehäuse (5) abgestützt werden. Der Revolverträger (9) mit der vorgenannten Ausbildung von Basisplatte (20) und Aufnahmen (21) beansprucht besonders wenig Bauraum und biete eine maximale Zugänglichkeit für jedes der Werkezeuge bei gleichzeitig hoher mechanischer Belastbarkeit. Insbesondere ist die seitliche Ausladung der Basisplatte (20) gegenüber im Wesentlichen flachen Bauformen deutlich geringer.

Zwischen der Revolverbasis (8) und dem Revolverträger (9) ist eine Rastvorrichtung (10) angeordnet. Die Rastvorrichtung (10) dient dazu, den Revolverträger (9) bei jeweils einer aktiven Position (AP) für jedes der Werkzeuge (11, 12, 13, 14) zu arretieren und zwar mit einer definierten und in der Höhe begrenzen Haltekraft. Sie kann alternativ oder zusätzlich dazu dienen, eine Stellkraft auf den Revolverträger (9) auszuwirken, die den Revolverträger (9) in Richtung zu vorbestimmten Vorzugslagen hin verdreht bzw. eine dorthin gerichtete Drehung kräftemäßig unterstützt. Die Vorzugslagen sind zumindest jeweils eine aktive Position für jedes der an dem Revolverträger angeordneten Werkzeuge (11, 12, 13, 14) .

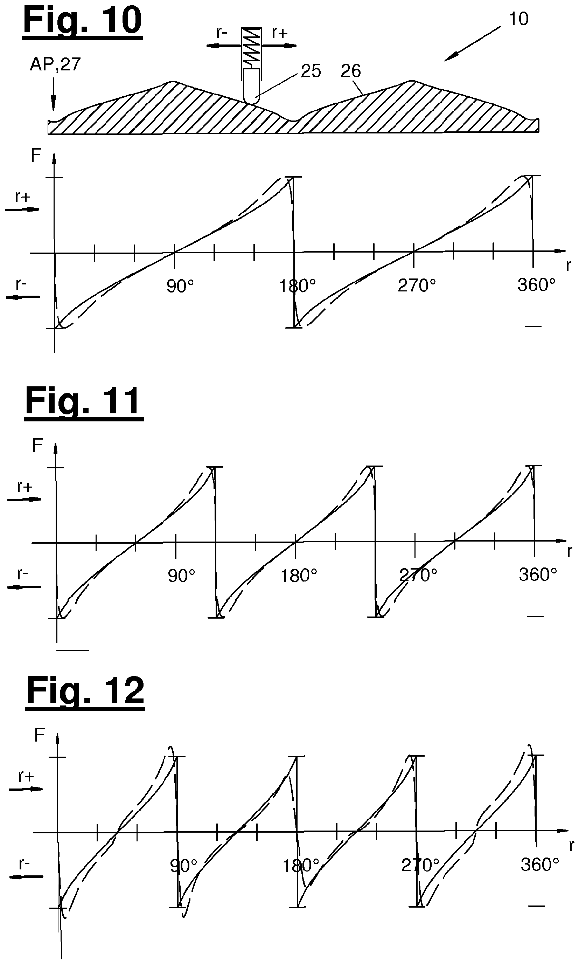

Die Rastvorrichtung (10) kann beliebig ausgebildet sein. Eine bevorzugte Ausführungsvariante der Rastvorrichtung (10) ist in Figur 10 beispielhaft dargestellt. Sie weist ein elastisch vorgespanntes Rastmittel (25) auf, das hier als federbelastete Rastnase ausgebildet ist. Dieses Rastmittel (25) steht im Eingriff mit einer Führungskurve (26). Die Führungskurve (26) weist gegenüber der Richtung der Vorspannkraft der Rastnase ein variierendes Höhenprofil auf. An den tiefsten Punkten des Höhenprofils sind Rastpositionen (27) gebildet, in denen das Rastmittel (25) fest einrastet. Solche Rastpositionen (27) sind bevorzugt so angeordnet, dass jeweils eines der Werkzeuge (11, 12, 13, 14) bei Erreichung einer Rastposition (27) in einer aktiven Position (AP) ist.

Die steigenden bzw. fallenden Flanken zwischen diesen Rastpositionen (27) bewirken eine Umlenkung der Vorspannkraft zur Erzeugung einer Stellkraft (F), welche eine Verdrehung des Revolverträgers (9) relativ zum Gehäuse (5) verursacht. Die Richtung (r+ / r-) und Höhe dieser Stellkraft (F) kann durch die Formgebung der Führungskurve (26) vorgegeben werden. Mit anderen Worten kann an jeder der möglichen Anordnungs-Positionen der Rastnase gegenüber der Führungskurve (26) eine Kraft in Drehrichtung des Revolverträgers eine resultierende Kraft in Anhebungsrichtung der Rastnase (25) bewirken. In dem gezeigten Beispiel ist die Steigung im momentanen Kontaktpunkt zwischen der Rastnase (25) und der Führungskurve (26) dafür ausschlaggebend, zu welchem Anteil die elastische Vorspannung der Rastnase (25) in eine Haltekraft bzw. eine Kraft umgesetzt wird, die eine Verdrehung des Revolverträgers hin zu einer aktiven Position (AP) bewirkt. Mit anderen Worten kann über den Verlauf der Führungskurve bzw. die Steigung der Flanken die Höhe der Haltekraft der Rastvorrichtung (10) festgelegt werden. Durch eine Änderung der Vorspannkraft auf die Rastnase (25) kann die Haltekraft ferner eingestellt werden.

Gemäß einem bevorzugten Aspekt der vorliegenden Offenbarung kann eine maximale Haltekraft der Rastvorrichtung (10) für jede Rastposition separat festgelegt und insbesondere einstellbar sein und/oder kann der Verlauf einer Stellkraft (F) der Rastvorrichtung (10) zur selbsttätigen Bewegung des Revolverträgers aus einer Zwischenposition zu einer benachbarten Rastposition für jeden Bereich zwischen zwei benachbarten Rastpositionen separat festlegbar sein. Eine maximale Haltekraft und/oder ein Verlauf der Stellkraft (F) der Rastvorrichtung (10) können insbesondere derart angepasst sein, dass zu erwartende Reaktionskräfte aus einer Werkzeugbetätigung abstützbar und/oder aus dem Gewicht eines Werkzeugs resultierende Reaktionskräfte kompensiert werden. Dies wird weiter unten anhand eines beispielhaften Kraftverlaufs weiter erläutert.

Gemäß einer bevorzugten Ausführungsvariante ist das Rastmittel (25) am Gehäuse (5), insbesondere an der Revolverbasis (8) angeordnet. Die Führungskurve (26) ist am Revolverträger (9) angeordnet und derart positioniert und ausgerichtet, dass das Rastmittel in jeder Drehstellung des Revolverträgers (9) in die Führungskurve (26) eingreift. In einem solchen Fall kann für jeden Revolverträger (9) eine geeignete Führungskurve (26) vorgesehen werden, wobei die Revolverträger (9) austauschbar sind.

Die Rastvorrichtung (10) ist bevorzugt dazu ausgebildet, den Revolverträger (9) jeweils aus einer Zwischenlage zwischen den vorgegebenen Rastpositionen (27) selbsttätig in Richtung einer Rastposition (27) zu verdrehen oder ein solches Verdrehen zu unterstützen. Dies führt bevorzugt dazu, dass der Revolverträger (9) sich selbsttätig aus einer Zwischenlage in Richtung einer aktiven Position (AP) für eines der Werkzeuge (11, 12, 13, 14) verdreht. Hierdurch werden Fehllagen der Werkzeuge (11, 12, 13, 14) verhindert und eine schnelle und exakte Einstellung einer gewünschten Werkzeugposition wird sichergestellt. Zwischen einer steigenden und einer fallenden Flanke sind entsprechend jeweils entweder eine Rastposition (27) oder ein oberer Totpunkt in der Bahn vorgesehen. Die Totpunkte sind bevorzugt derart gewählt, dass dort nur ein minimaler Bereich mit semistabiler Gleichgewichtslage erzeugt wird, sodass die Rastvorrichtung stets den Revolverträger in Richtung einer vor oder hinter dem Totpunkt nächsten Rastposition (27) verdreht.

Eine Rastvorrichtung (10) kann alternativ eine andere Ausgestaltung aufweisen. Beispielsweise kann eine (erste) Führungskurve (26) lediglich Rastpositionen (27) jedoch keine steigenden oder fallenden Flanken in den Bereichen zwischen zwei Rastpositionen aufweisen. In einem solchen Fall können beliebige andere Stellelemente vorgesehen sein, um ein selbsttätiges Verdrehen des Revolverträgers aus den Zwischenlagen in Richtung einer Rastposition (27) herbeizuführen, beispielsweise eine zusätzliche (zweite) Führungskurve, die ausschließlich für die Erzeugung der Stellkraft genutzt wird. Diese Stellelemente sind bevorzugt rein mechanisch oder pneumatisch und kommen ohne eine externe Energiezufuhr aus. Die Energie zur Bewirkung des selbsttätigen Verdrehens kann bevorzugt einem Energiespeicher entnommen werden, der bei einem Überwinden der begrenzten Haltekraft durch den Manipulator Energie aufnimmt und bei dem weiteren selbsttätigen Verdrehen wieder abgibt (Feder, Druckkammer, Schwungrad etc.). Die Stellelemente können einen beliebigen Kraftwandler (Getriebe, Kolben) umfassen, um den Energiespeicher energetisch mit der Drehbewegung des Revolverträgers zu koppeln. Ferner können ein Arretieren in den Vorzugslagen und/oder das Aufbringen einer Stellkraft über andere Mittel erfolgen, bspw. über an geeigneten Stellen angeordnete Permanentmagnete am Gehäuse (5) und am Revolverträger (9). Diese anderen Mittel sowie die erwähnten Stellelemente können alternativ oder zusätzlich zu den konkret erläuterten Ausführungsformen der Rastvorrichtung (10) und/oder der Lagesicherung (15) vorgesehen sein.

In den Figuren 10, 11, 12 sind Beispiele für die Verläufe der Stellkraft (F) in Abhängigkeit von einer Revolverdrehung (r) für jeweils einen Werkzeugrevolver (7) mit zwei Werkzeugen (Figur 10), mit drei Werkzeugen (Figur 11) oder mit vier Werkzeugen (Figur 12) dargestellt. Es wird davon ausgegangen, dass die Werkzeuge (11, 12, 13, 14) regelmäßig am Umfang des Revolverträgers (9) angeordnet sind (vgl. Figuren 1, 2, 3). Der Verdrehungswinkel zwischen zwei Rastpositionen beträgt dann jeweils 180 Grad, 120 Grad oder 90 Grad. Alternativ können die zwei oder mehr Werkzeuge (11, 12, 13, 14) am Umfang des Revolverträgers auch unregelmäßig angeordnet sein, sodass zwischen zwei Rastpositionen jeweils unterschiedliche Winkelstrecken liegen können. Dies ist beispielsweise dann sinnvoll, wenn die einzelnen Werkzeuge unterschiedliche Größen oder erforderliche seitliche Freiräume haben. Die Verläufe der Stellkraft (F) sind gekennzeichnet durch jeweils schmale Bereiche um eine einzelne Rastposition, in denen die Kraft (F) von einem positiven Maximalwert (in der einen Drehrichtung) zu einem negativen Maximalwert (in der anderen Drehrichtung) mit einer hohen Steigung verläuft, wobei der Null-Durchgang zwischen diesen Maximalwerten die Rastposition kennzeichnet. Andererseits sind die Verläufe der Stellkraft (F) gekennzeichnet durch breite Bereiche zwischen zwei benachbarten Rastpositionen, in denen die Kraft (F) von einem positiven (oder negativen) Maximalwert an der einen Rastposition mit schwacher Steigung zu einem negativen (oder positiven) Maximalwert an der nächsten Rastposition verläuft. Innerhalb dieser breiten Bereiche kann ein Null-Durchgang der Kraft (F) vorliegen, der eine semistabile Gleichgewichtslage kennzeichnet.

Die Verläufe der steigenden und fallenden Flanken können für jede Rastposition bzw. für jeden Zwischenbereich einheitlich gewählt sein. Alternativ kann der Verlauf der Führungsbahn für jede Rastposition und/oder jeden Zwischenbereich zwischen zwei benachbarten Rastpositionen individuell gewählt werden. Eine lokale Anpassung der Führungsbahn kann beispielsweise erfolgen, um für jedes Werkzeug eine separate maximale Haltekraft (Kraft-Schwellenwert) festzulegen. Beispielsweise können verhältnismäßig hohe maximale Haltekräfte (steile Flanken) für ein Werkzeug vorgesehen werden, das bei der Bearbeitung hohe Reaktionskräfte tangential zur Drehrichtung des Revolverträgers erzeugt, wie beispielsweise ein Fräswerkzeug oder ein Bohrwerkzeug. Ferner können relativ hohe maximale Haltekräfte für Werkzeuge mit einem hohen Eigengewicht genutzt werden, um eine unerwünschte Verdrehung aufgrund einer Querbeschleunigung bei der Bewegung der Manipulatorhand zu verhindern. Für leichte Werkzeuge und/oder Werkzeuge mit geringer zu erwartender Reaktionskraft kann hingegen eine deutlich geringere maximale Haltekraft vorgesehen werden. Ferner können die Verläufe der Kraft (F) zwischen zwei benachbarten Rastpositionen so gewählt werden, dass unterschiedliche Gewichtsverteilungen am Revolverkopf kompensiert werden. Wenn beispielsweise bei einer Drehung des Revolverkopfes ein besonders schweres Werkzeug beschleunigt und/oder angehoben werden muss, kann durch den entsprechenden Bereich der Führungsbahn eine verhältnismäßig hohe Stellkraft erzeugt werden und umgekehrt.

Unterschiedlich hohe maximale Haltekräfte für die einzelnen Werkzeuge und/oder unterschiedlich hohe Stellkräfte für das selbsttätige Bewegen des Revolverträgers aus Zwischenpositionen hin zu einer nächsten Rastposition können ferner genutzt werden, um eine momentane Stellung der Werkzeugrevolvers zu erfassen.

Die Revolverachse (R), um die der Revolverträger (9) dreht, schneidet bevorzugt die Antriebsachse (A) der Antriebswelle (6) bzw. die Hauptachse (A') der Manipulatorhand (vgl. Figur 4). Der Anstellwinkel (w) zwischen der Antriebsachse (A) und der Revolverachse (R) kann beliebig gewählt werden. Er liegt bevorzugt in einem Bereich zwischen 30 und 60 Winkelgrad, insbesondere bei 45 Winkelgrad. Je größer der Anstellwinkel (w) gewählt wird, desto weiter bewegen sich die in den passiven Positionen (PP) befindlichen Werkzeuge (12, 13, 14) bei einer Drehung aus dem Wirkbereich des aktiven Werkzeugs (11) heraus. In den gezeigten Beispielen beträgt der Anstellwinkel (w) jeweils im Wesentlichen 45 Winkelgrad.

Der Revolverträger (9) kann am Gehäuse (5) auf beliebige Weise gelagert sein. Gemäß der in den Figuren gezeigten bevorzugten Ausführungsvariante ist an dem Gehäuse (5) eine Revolverbasis (8) vorgesehen, die eine Rotationsebene (E) für die Drehung des Revolverträgers (9) vorgibt. Über diese Revolverbasis (8) können die von dem Eingriff des in der aktiven Position (AP) befindlichen Werkzeugs (11) hervorgerufenen Reaktionskräfte und Haltekräfte auf das Gehäuse (5) und weiter auf den Manipulator (2) übertragen werden. Die Revolverbasis (8) kann insbesondere ringförmig ausgebildet sein. Sie kann ggf. einstückig mit dem Gehäuse (5) verbunden bzw. an dieses angeformt sein. Alternativ kann die Revolverbasis (8) als separates Teil ausgebildet sein. Durch eine Öffnung im Ringzentrum der Revolverbasis (8) kann die Antriebswelle (6) bzw. die Antriebsklaue (16a) hindurchragen.

Gemäß einer alternativen Ausführungsvariante (nicht dargestellt) kann die Revolverachse (R) seitlich versetzt zur Antriebsachse (A) der Antriebswelle (6) angeordnet sein. Mit anderen Worten können die Revolverachse (R) und die Antriebsachse (A) windschief zueinander angeordnet sein. Durch einen solchen Versatz zwischen den Achsen kann der zwischen einem aktiven Werkzeug (11) und den weggedrehten passiven Werkzeugen (12, 13, 14) erreichbare Abstand noch weiter vergrößert werden. Ferner kann für den Revolverträger (9) eine Lagerung auf einer Zentralwelle (Tragbolzen) vorgesehen sein, wobei auf eine Durchführung der Antriebswelle (6) oder der Kupplung (16) durch die Lagerstelle verzichtet werden kann. In diesem Fall ist der Anstellwinkel (w) zwischen der Revolverachse (R) und einer Parallele zur Antriebswelle (6) definiert und er hat bevorzugt die oben genannten Winkelmaße.

Durch den Versatz zwischen Revolverachse (R) und Antriebswelle (6) sind leicht zu wartende und mechanisch besonders belastbare Ausbildungsvarianten möglich, die allerdings insgesamt eine größere seitliche Ausladung der Werkzeugwechselvorrichtung (1) bedingen.

Der Revolverträger (9) kann bevorzugt durch ein Schnellverschlusssystem am Gehäuse (5), insbesondere an der Revolverbasis (8), gelagert sein. Durch ein solches Schnellverschlusssystem können mehrere Revolverträger (9), die jeweils mit Werkzeugen (11, 12, 13, 14) vorbestückt sind, auf einfache und schnelle Weise ausgetauscht werden, was die Variabilität der Werkzeugwechselvorrichtung weiter erhöht.

Der Vorgang eines Werkzeugwechsels wird nachfolgend unter Bezugnahme auf die Figur 9 beispielhaft erläutert. In einer Ausgangssituation kann eine Werkzeugwechselvorrichtung (1) an einer Manipulatorhand, bzw. Roboterhand (3) befestigt sein. Hierzu kann eine Flanschplatte (4) des Gehäuses (5) fest mit der Manipulatorhand (3) verschraubt sein. Die Antriebswelle (6) ist dabei in die Wellenaufnahme (22) eingesetzt und drehfest mit einem Abtriebsstutzen des Manipulators (2) verbunden. Alternativ kann zwischen der Werkzeugwechselvorrichtung (1) und der Roboterhand (3) der vorerwähnte Adapter angeordnet sein und/oder die Werkzeugwechselvorrichtung (1) kann einen eigenen Antrieb aufweisen.

In dem in Figur 9 gezeigten Beispiel ist der Manipulator (2) als siebenachsiger Leichtbauroboter ausgebildet. Dessen Bewegungsachsen sind mit I bis VII gekennzeichnet. Die Antriebsachse (A) der Antriebswelle (6) fällt bevorzugt mit der siebten Bewegungsachse (A', VII) kollinear zusammen. Alternativ kann eine andere Anordnung oder Befestigung der Werkzeugwechselvorrichtung (1) am Manipulator (2) vorgesehen sein. Wenn eine Werkzeugwechselvorrichtung ohne antreibbare Werkzeuge genutzt wird, kann es für die Ausrichtung der aktiven Position (AP) ggfs. auf eine Kollinearität zur Hauptachse (A') der Roboterhand ankommen, die meist mit der Antriebsachse (A) zusammenfällt. Im Rahmen der vorliegenden Offenbarung wird davon ausgegangen, dass die Anordnung der Antriebsachse (A) und der Hauptachse (A') der Roboterhand identisch sind, sodass auf eine weitere Unterscheidung verzichtet wird.

Der Leichtbauroboter weist bevorzugt eine Kraft- bzw. Momenten-Sensorik auf. Über diese Sensorik können in allen oder in ausgewählten Bewegungsachsen (I bis VII) auftretende Reaktionskräfte oder Reaktionsmomente erfasst werden. Diese Kräfte und Momente können zur Steuerung bzw. Regelung des Manipulators sowie der Werkzeugwechselvorrichtung (1) herangezogen werden.

Wenn über die Ansteuerung des Manipulators (2) die Werkzeugwechselvorrichtung (1) gegen ein externes Objekt (23) bewegt wird, können aus den vorgenannten Reaktionskräften und/oder Reaktionsmomenten Rückschlüsse über die Wechselwirkung zwischen dem externen Objekt und der Wechselvorrichtung (1), insbesondere einem Werkzeug (11, 12, 13, 14) gezogen werden. In einer Steuerung (24), insbesondere einer Anlagensteuerung des Bearbeitungssystems, sind Geometriedaten über den Manipulator (2) sowie die Werkzeugwechselvorrichtung (1) hinterlegt. Ferner kann die momentane Position bzw.

Stellung jedes Glieds und/oder jeder Bewegungsachse (I bis VII) des Manipulators (2) erfasst werden.

Um einen Werkzeugwechsel auszuführen, wird das aktive Werkzeug (11) in einer Richtung (im Wesentlichen) tangential zur Rotationsebene (E) des Revolverträgers (9) gegen ein externes Objekt (23) bewegt und um dieses herum geführt. Dies geschieht über eine entsprechende Ansteuerung der Bewegungsachsen (I bis VII) des Manipulators (2). Sobald das Werkzeug (11) an dem externen Objekt (23) zur Anlage kommt, sind die von der Rastvorrichtung (10) erzeugte Haltekraft bzw. ein Überwinden einer Stellkraft (F) der Rastvorrichtung (10) über die Sensorik des Manipulators (2) erfassbar. Die Halte- bzw. Stellkraft ist aus den in den einzelnen Bewegungsachsen (I-VII) erfassbaren Reaktionskräften bzw. Reaktionsmomenten berechenbar.

Wenn die Werkzeugwechselvorrichtung (1) entgegen dieser Halte- bzw. Stellkraft (F) weiterbewegt wird, wird der Revolverträger (9) relativ zum Gehäuse (5) verdreht. Die Bewegung des Manipulators (2) bzw. der Werkzeugwechselvorrichtung (1) kann dabei derart gesteuert werden, dass der Revolverträger soweit verdreht wird, bis das jeweils nächste Werkzeug (12, 13, 14) oder ein gewünschtes Werkzeug in der aktiven Position (AP) einrastet. Das Verdrehen des Revolverträgers (9) kann dabei zusätzlich durch die Rastvorrichtung (10) und den von dieser erzeugten Stellkräften (F) unterstützt sein.

Über die Sensorik des Leichtbauroboters können insbesondere das Erreichen bzw. Überschreiten der maximalen Haltekraft sowie ggfs. deren Höhe detektiert werden. Wenn für die Rastpositionen der verschiedenen Werkzeuge unterschiedliche maximale Haltekräfte festgelegt sind, kann der Roboter aus dem Verlauf der detektierten Reaktionskräfte beim Verdrehen des Revolverträgers und insbesondere aus der Lage und/oder Höhe der maximalen Haltekraft erkennen, welches Werkzeug sich in der aktiven Position befunden hat.

Wenn an der Werkzeugwechselvorrichtung (1) eine Lagesicherung (15) angeordnet ist, kann ggf. vor einem Werkzeugwechsel ein Deaktivierungsmittel der Lagesicherung (15) gegen ein externes Objekt (23) bewegt werden, um die Lagesicherung (15) zu lösen. Insbesondere kann an einer Außenseite des Gehäuses (5) ein Schaltmittel einer als Schnappeinrichtung ausgebildeten Lagesicherung vorgesehen sein. Dieses Schaltmittel kann durch eine entsprechende Relativbewegung zwischen Werkzeugwechselvorrichtung (1) und externem Objekt (23) aktiviert, insbesondere eingedrückt oder umgelegt werden, um die Lagesicherung zu lösen. Durch das Lösen der Lagesicherung wird ein Verdrehen des Revolverträgers (9) und/oder ein Öffnen der Kupplung (16) freigegeben. Mit anderen Worten wird die Blockadefunktion der Lagesicherung (15) aufgehoben.

Nachdem ein Werkzeugwechsel ausgeführt worden ist, kann die Lagesicherung (15) wieder aktiviert bzw. geschlossen werden. Hierzu kann beispielsweise das aktive Werkzeug (11) in der oben beschriebenen Weise in Richtung zum Gehäuse (5) hin eingeschoben werden, um die Kupplung (16) zu schließen und die als Schnappvorrichtung ausgebildete Lagesicherung zu aktivieren.

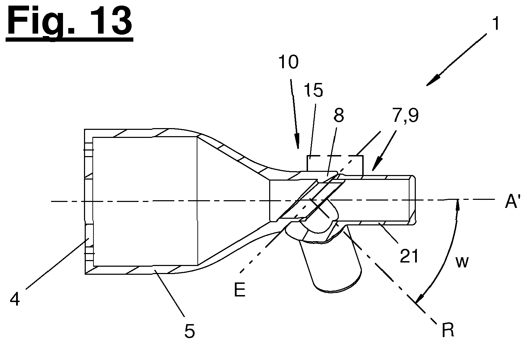

In Figur 13 ist eine Variante der Werkzeugwechselvorrichtung (1) gezeigt, die keine über die Antriebswelle des Manipulators antreibbaren Werkzeuge aufnimmt. Eine solche Werkzeugwechselvorrichtung (1) kann bspw. zur Aufnahme von Messwerkzeugen, gegenüber der Manipulatorhand unbewegten Werkzeugen oder zur Aufnahme von Werkzeugen mit eigenen und/oder nicht-mechanischen Antrieben vorgesehen sein. Als unbewegte Werkezuge kommen beispielsweise Stanz- oder Prägewerkzeuge in Frage. Eigene bzw. nicht-mechanische Antriebe können bspw. hydraulische Antriebe oder elektromotorische Antriebe sein. Im Übrigen entsprechen Aufbau und Funktion der in Figur 13 dargestellten Werkzeugwechselvorrichtung (2) den zuvor beschriebenen Ausführungsvarianten.

Abwandlungen der Erfindung sind in verschiedener Weise möglich. Insbesondere können die zu den einzelnen Ausführungsbeispielen beschriebenen oder gezeigten Merkmale in beliebiger Weise miteinander kombiniert, gegeneinander ersetzt, ergänzt oder weggelassen werden.

An einer Werkzeugwechselvorrichtung (1) können fünf, sechs oder mehr Werkzeuge angeordnet sein. Diese können teilweise als aktive oder als passive Werkzeuge ausgebildet sein und somit nur teilweise über antreibbare Werkzeugwellen (18) verfügen.

Ein Werkzeug (11, 12, 13, 14) kann in funktionaler Vertauschung gegenüber dem gezeigten und beschriebenen Ausführungsbeispiel durch ein elastisches Rückstellelement in einer eingekoppelten Position gehalten werden. Ein Auskoppeln kann dann beispielsweise durch Herausziehen der Werkzeugwelle (18) aus dem Gehäuse oder durch Betätigung eines separaten Kupplungslösemittels erfolgen. Eine solche Betätigung kann ebenfalls durch Anlegen des Kupplungslösemittels an einem externen Objekt (23) geschehen.

### BEZUGSZEICHENLISTE

- 1: Werkzeugwechselvorrichtung
- 2: Manipulator / Industrieroboter / Leichtbauroboter
- 3: Roboterhand
- 4: Flanschplatte
- 5: Gehäuse
- 6: Antriebswelle
- 7: Werkzeugrevolver
- 8: Revolverbasis
- 9: Revolverträger
- 10: Rastvorrichtung
- 11: Erstes Werkzeug
- 12: Zweites Werkzeug
- 13: Drittes Werkzeug
- 14: Viertes Werkzeug
- 15: Lagesicherung
- 16: Kupplung / Klauenkupplung
- 16a: Antriebsklaue
- 16b: Abtriebsklaue
- 17: Elastisches Rückstellelement / Feder
- 18: Werkzeugwelle
- 19: Werkzeugkopf
- 20: Basisplatte
- 21: Aufnahme
- 22: Wellenaufnahme
- 23: Externes Objekt / Stationäre Kontur
- 24: Steuerung / Anlagensteuerung
- 25: Rastmittel
- 26: Führungskurve
- 27: Rastposition
- A: Antriebsachse
- A': Hauptachse Roboterhand / 7. Achse
- AP: Aktive Position
- PP: Passive Position
- R: Revolverachse
- E: Rotationsebene
- w: Anstellwinkel
- r: Revolverdrehung
- r+: Drehrichtung positiv
- r-: Drehrichtung negativ
- F: Stellkraft (in Drehrichtung r+ / r-)
- I-VII: Achsen des Manipulators / Bewegungsachsen

## Patentansprüche

1. Werkzeugwechselvorrichtung für Industrieroboter oder Leichtbauroboter, mit einem Gehäuse (5) und einer Antriebswelle (6) zur Anbringung an einer Manipulatorhand (3), wobei die Werkzeugwechselvorrichtung (1) einen Werkzeugrevolver (7) mit einem drehbar am Gehäuse (5) gelagerten Revolverträger (9) aufweist und an dem Revolverträger (9) zwei oder mehr Werkzeuge (11, 12, 13, 14) angeordnet sind, und wobei der Revolverträger (9) um eine schräg zur Antriebswelle (6) verlaufende Revolverachse (R) drehbar ist, um abwechselnd jeweils ein Werkzeug (11, 12, 13, 14) in eine aktive Position (AP) zu bewegen, wobei die Werkzeugwechselvorrichtung (1), insbesondere der Werkzeugrevolver (7), eine Rastvorrichtung (10) aufweist, die ein Werkzeug (11, 12, 13, 14) in einer Rastposition, insbesondere in einer aktiven Position (AP), hält, wobei die Rastvorrichtung (10) das Werkzeug mit einer begrenzten Haltekraft in der Rastposition hält.

2. Werkzeugwechselvorrichtung nach Anspruch 1, **dadurch gekennzeichnet, dass** die Rastvorrichtung (10) ein elastisch vorgespanntes Rastmittel (25) aufweist, insbesondere eine federbelastete Rastnase zum Eingriff in eine Führungskurve (26), und wobei insbesondere eine maximale Haltekraft der Rastvorrichtung (10) für jede Rastposition separat festgelegt und insbesondere einstellbar ist.

3. Werkzeugwechselvorrichtung nach einem der vorhergehenden Ansprüche, **dadurch gekennzeichnet, dass** die Rastvorrichtung (10) dazu ausgebildet ist, den Revolverträger (9) aus einer Zwischenlage selbsttätig in Richtung einer Rastposition (27) zu verdrehen, insbesondere in Richtung einer aktiven Position (AP), und wobei insbesondere der Verlauf einer Stellkraft (F) der Rastvorrichtung (10) zur selbsttätigen Bewegung des Revolverträgers aus einer Zwischenposition zu einer benachbarten Rastposition für jeden Bereich zwischen zwei benachbarten Rastpositionen separat festlegbar ist.

4. Werkzeugwechselvorrichtung nach einem der vorhergehenden Ansprüche, **dadurch gekennzeichnet, dass** die Revolverachse (R) eine Antriebsachse (A) der Antriebswelle (6) schneidet, oder dass die Revolverachse (R) seitlich versetzt zur Antriebsachse (A) der Antriebswelle (6) angeordnet ist.

5. Werkzeugwechselvorrichtung nach einem der vorhergehenden Ansprüche, **dadurch gekennzeichnet, dass** der Revolverträger (9) eine Basisplatte (20) und mehrere, insbesondere zwei, drei oder vier Aufnahmen (21) für Werkzeuge (11, 12, 13, 14) aufweist, wobei insbesondere eine Werkzeugwelle (18) eines Werkzeugs (11, 12, 13, 14) in der Aufnahme (21) drehbar und axial verschieblich gelagert ist.

6. Werkzeugwechselvorrichtung nach einem der vorhergehenden Ansprüche, **dadurch gekennzeichnet, dass** ein Werkzeug (11, 12, 13, 14) durch ein elastisches Rückstellelement (17) in einer von der Antriebswelle (6) entkoppelten Position gehalten ist.

7. Werkzeugwechselvorrichtung nach einem der vorhergehenden Ansprüche, **dadurch gekennzeichnet, dass** die Werkzeugwechselvorrichtung (1) eine Kupplung (16) aufweist, über welche die Werkzeugwelle (18) eines in der aktiven Position (AP) befindlichen Werkzeugs (11, 12, 13, 14) mit der Antriebswelle (6) treibend verbindbar ist, wobei insbesondere die Kupplung (16) durch eine Bewegung eines in der aktiven Position (AP) befindlichen Werkzeugs (11, 12, 13, 14) in Richtung zum Gehäuse (5) schließbar ist.

8. Werkzeugwechselvorrichtung nach einem der vorhergehenden Ansprüche, **dadurch gekennzeichnet, dass** die Werkzeugwechselvorrichtung (1) eine Lagesicherung (15) aufweist, die ein Werkzeug (11, 12, 13, 14) in der aktiven Position (AP) und/oder in der eingekuppelten Stellung sichert, wobei die Lagesicherung (15) insbesondere derart ausgebildet ist, dass sie sich selbsttätig beim Schließen der Kupplung (16) aktiviert und/oder die Lagesicherung (15) als federbelasteter Schnappverschluss ausgebildet ist.

9. Werkzeugwechselvorrichtung nach einem der vorhergehenden Ansprüche, **dadurch gekennzeichnet, dass** eine maximale Haltekraft und/oder ein Verlauf der Stellkraft (F) der Rastvorrichtung (10) derart angepasst ist, dass zu erwartende Reaktionskräfte aus einer Werkzeugbetätigung abgestützt und/oder aus dem Gewicht eines Werkzeugs resultierende Reaktionskräfte kompensiert werden.

10. Bearbeitungsvorrichtung mit einem mehrachsigen Manipulator (2), einer von dem Manipulator geführten Werkzeugwechselvorrichtung (1) und einer Steuerung (24), **dadurch gekennzeichnet, dass** die Werkzeugwechselvorrichtung (2) nach einem der vorhergehenden Ansprüche ausgebildet ist.

11. Bearbeitungsvorrichtung nach dem vorhergehenden Anspruch, **dadurch gekennzeichnet, dass** die Steuerung dazu ausgebildet ist, den Manipulator zur Durchführung eines Werkzeugwechsels derart zu steuern, dass ein Werkzeug (11, 12, 13, 14) im Wesentlichen tangential zur Rotationsebene (E) des Revolverträgers (9) gegen ein externes Objekt (23) bewegt wird, wobei insbesondere der Manipulator (2) eine Kraft- oder Momenten-Sensorik aufweist., und wobei insbesondere durch die Bewegung des Manipulators die beschränkte Haltekraft (F) der Rastvorrichtung (10) überwunden und ein Drehen des Revolverträgers (9) um die Revolverachse (R) bewirkt wird, bis ein Werkzeug (11, 12, 13, 14) in der aktiven Position (AP) einrastet.

12. Bearbeitungsvorrichtung nach einem der vorhergehenden Ansprüche, **dadurch gekennzeichnet, dass** die Steuerung dazu ausgebildet ist, den Manipulator derart zu steuern, dass die Werkzeugwechselvorrichtung (1) mit einem Deaktivierungsmittel der Lagesicherung (15) gegen ein externes Objekt (23) bewegt wird, um die Lagesicherung (15) zu deaktivieren.

13. Verfahren zum Betrieb eines Manipulators (2), insbesondere eines Leichtbauroboters oder Industrieroboters, mit einer Werkzeugwechselvorrichtung (1) gemäß einem der vorhergehenden Ansprüche, wobei der Manipulator (2) eine Kraft- oder Momenten-Sensorik aufweist, das Betriebsverfahren umfassend die folgenden Schritte zur Durchführung eines Werkzeugwechsels:
- Ansteuern des Manipulators (2), um die Werkzeugwechselvorrichtung (1), insbesondere ein aktives Werkzeug (11), gegen ein externes Objekt (23) zu bewegen, wobei die Richtung der Bewegung bezogen auf den Kontaktpunkt tangential zur Rotationsebene (E) des Revolverträgers (9) orientiert ist und die Werkzeugwechselvorrichtung (1) um das externe Objekt (23) herum geführt wird, um den Revolverträger (9) relativ zum Gehäuse der Werkzeugwechselvorrichtung (1) zu verdrehen;
- Erfassen der von der Rastvorrichtung (10) erzeugten Haltekraft und/oder Erfassen eines Überwindens einer Stellkraft (F) der Rastvorrichtung (10) über die Sensorik des Manipulators.

14. Betriebsverfahren zur Durchführung eines Werkzeugwechsels nach dem vorhergehenden Anspruch, **dadurch gekennzeichnet, dass** das Erreichen und/oder Überschreiten der maximalen Haltekraft und/oder deren Höhe detektiert wird.

15. Betriebsverfahren zur Durchführung eines Werkzeugwechsels nach dem vorhergehenden Anspruch, **dadurch gekennzeichnet , dass** für die Rastpositionen von verschiedenen Werkzeugen unterschiedliche maximale Haltekräfte festgelegt sind und dass aus dem Verlauf der detektierten Reaktionskräfte beim Verdrehen des Revolverträgers und insbesondere aus der Lage und/oder der Höhe der maximalen Haltekraft detektiert wird, welches Werkzeug sich zu Beginn des Wechselvorgangs in der aktiven Position befunden hat.

## Claims

1. Tool changing device for industrial robots or lightweight robots, having a housing (5) and a drive shaft (6) for attaching to a manipulator hand (3), wherein the tool changing device (1) has a tool turret (7) with a turret carrier (9) mounted rotatably on the housing (5) and two or more tools (11, 12, 13, 14) are arranged on the turret carrier (9), and wherein the turret carrier (9) is rotatable about a turret axis (R) extending obliquely with respect to the drive shaft (6) in order to alternately move in each case one tool (11, 12, 13, 14) into an active position (AP), wherein the tool changing device (1), in particular the tool turret (7), has a latching device (10) that holds a tool (11, 12, 13, 14) in a latched position, in particular in an active position (AP), wherein the latching device (10) holds the tool in the latched position with a limited holding force.

2. Tool changing device according to Claim 1, **characterized in that** the latching device (10) has an elastically preloaded latching means (25), in particular a spring-loaded detent for engaging in a guide cam (26), and wherein in particular a maximum holding force of the latching device (10) is defined and in particular is settable separately for each latched position.

3. Tool changing device according to either of the preceding claims, **characterized in that** the latching device (10) is configured to rotate the turret carrier (9) automatically out of an intermediate position in the direction of a latched position (27), in particular in the direction of an active position (AP), and wherein in particular the profile of an actuating force (F) of the latching device (10) for automatically moving the turret carrier from an intermediate position to an adjacent latched position is definable separately for each region between two adjacent latched positions.

4. Tool changing device according to one of the preceding claims, **characterized in that** the turret axis (R) intersects a drive axis (A) of the drive shaft (6), or **in that** the turret axis (R) is arranged in a laterally offset manner with respect to the drive axis (A) of the drive shaft (6).

5. Tool changing device according to one of the preceding claims, **characterized in that** the turret carrier (9) has a base plate (20) and a plurality of, in particular two, three or four receptacles (21) for tools (11, 12, 13, 14), wherein in particular a tool shaft (18) of a tool (11, 12, 13, 14) is mounted in the receptacle (21) in a rotatable and axially displaceable manner.

6. Tool changing device according to one of the preceding claims, **characterized in that** a tool (11, 12, 13, 14) is held by an elastic restoring element (17) in a position uncoupled from the drive shaft (6) .

7. Tool changing device according to one of the preceding claims, **characterized in that** the tool changing device (1) has a clutch (16) via which the tool shaft (18) of a tool (11, 12, 13, 14) located in the active position (AP) is able to be connected to the drive shaft (6) in a driving manner, wherein in particular the clutch (16) is closable by a tool (11, 12, 13, 14) located in the active position (AP) moving in the direction of the housing (5).

8. Tool changing device according to one of the preceding claims, **characterized in that** the tool changing device (1) has a position securing means (15) that secures a tool (11, 12, 13, 14) in the active position (AP) and/or in the engaged position, wherein the position securing means (15) is configured in particular such that it is activated automatically when the clutch (16) is closed and/or the position securing means (15) is configured as a spring-loaded snap lock.

9. Tool changing device according to one of the preceding claims, **characterized in that** a maximum holding force and/or a profile of the actuating force (F) of the latching device (10) is adapted such that expected reaction forces from tool actuation are supported and/or reaction forces resulting from the weight of a tool are compensated.

10. Machining device having a multiaxial manipulator (2), a tool changing device (1) guided by the manipulator and a controller (24), **characterized in that** the tool changing device (2) is configured according to one of the preceding claims.

11. Machining device according to the preceding claim, **characterized in that** the controller is configured to control the manipulator to effect a tool change such that a tool (11, 12, 13, 14) is moved substantially tangentially to the plane of rotation (E) of the turret carrier (9) against an external object (23), wherein in particular the manipulator (2) has a force or torque sensor system, and wherein in particular the limited holding force (F) of the latching device (10) is overcome by the movement of the manipulator and the turret carrier (9) is made to rotate about the turret axis (R) until a tool (11, 12, 13, 14) latches in place in the active position (AP).

12. Machining device according to either of the preceding claims, **characterized in that** the controller is configured to control the manipulator such that the tool changing device (1) is moved against an external object (23) with a deactivation means of the position securing means (15), in order to deactivate the position securing means (15).

13. Method for operating a manipulator (2) in particular of a lightweight robot or industrial robot, having a tool changing device (1) according to one of the preceding claims, wherein the manipulator (2) has a force or torque sensor system, the operating method comprising the following steps for executing a tool change:
- actuating the manipulator (2) in order to move the tool changing device (1), in particular an active tool (11), against an external object (23), wherein the direction of the movement is oriented tangentially to the plane of rotation (E) of the turret carrier (9) with regard to the contact point and the tool changing device (1) is guided about the external object (23) in order to rotate the turret carrier (9) relative to the housing of the tool changing device (1);
- sensing the holding force generated by the latching device (10) and/or sensing when an actuating force (F) of the latching device (10) is overcome via the sensor system of the manipulator.

14. Operating method for executing a tool change according to the preceding claim, **characterized in that** the reaching and/or exceeding of the maximum holding force and/or the level thereof is/are detected.

15. Operating method for executing a tool change according to the preceding claim, **characterized in that** different maximum holding forces are defined for the latching positions of different tools, and **in that** the tool that was located in the active position at the start of the changing operation is detected from the profile of the detected reaction forces when the turret carrier is rotated and in particular from the position and/or the level of the maximum holding force.

## Revendications

1. Dispositif de changement d'outil pour robots industriels ou robots de construction légère, comprenant un boîtier (5) et un arbre d'entraînement (6) à monter sur une main de manipulateur (3), le dispositif de changement d'outil (1) présentant une tourelle d'outil (7) avec un support de tourelle (9) supporté de manière rotative sur le boîtier (5) et deux ou plus de deux outils (11, 12, 13, 14) étant disposés sur le support de tourelle (9), et le support de tourelle (9) pouvant tourner autour d'un axe de tourelle (R) s'étendant obliquement par rapport à l'arbre d'entraînement (6), afin de déplacer en alternance à chaque fois un outil (11, 12, 13, 14) dans une position active (AP), le dispositif de changement d'outil (1), en particulier la tourelle d'outil (7), présentant un dispositif d'encliquetage (10) qui retient un outil (11, 12, 13, 14) dans une position d'encliquetage, en particulier dans une position active (AP), le dispositif d'encliquetage (10) retenant l'outil avec une force de retenue limitée dans la position d'encliquetage.

2. Dispositif de changement d'outil selon la revendication 1, **caractérisé en ce que** le dispositif d'encliquetage (10) présente un moyen d'encliquetage (25) précontraint élastiquement, en particulier un ergot d'encliquetage sollicité par ressort, destiné à venir en prise dans une courbe de guidage (26), et notamment une force de retenue maximale du dispositif d'encliquetage (10) étant établie et notamment pouvant être ajustée séparément pour chaque position d'encliquetage.

3. Dispositif de changement d'outil selon l'une quelconque des revendications précédentes, **caractérisé en ce que** le dispositif d'encliquetage (10) est réalisé de manière à faire tourner le support de tourelle (9) automatiquement depuis une position intermédiaire dans la direction d'une position d'encliquetage (27), en particulier dans la direction d'une position active (AP), et notamment, l'allure d'une force de commande (F) du dispositif d'encliquetage (10) pouvant être établie séparément pour déplacer automatiquement le support de tourelle d'une position intermédiaire à une position d'encliquetage adjacente pour chaque région entre deux positions d'encliquetage adjacentes.

4. Dispositif de changement d'outil selon l'une quelconque des revendications précédentes, **caractérisé en ce que** l'axe de tourelle (R) coupe un axe d'entraînement (A) de l'arbre d'entraînement (6) ou **en ce que** l'axe de tourelle (R) est disposé de manière décalée latéralement par rapport à l'axe d'entraînement (A) de l'arbre d'entraînement (6).

5. Dispositif de changement d'outil selon l'une quelconque des revendications précédentes, **caractérisé en ce que** le support de tourelle (9) présente une plaque de base (20) et plusieurs, en particulier deux, trois ou quatre logements (21) pour des outils (11, 12, 13, 14), en particulier un arbre d'outil (18) d'un outil (11, 12, 13, 14) étant supporté dans le logement (21) de manière rotative et déplaçable axialement.

6. Dispositif de changement d'outil selon l'une quelconque des revendications précédentes, **caractérisé en ce qu'**un outil (11, 12, 13, 14) est retenu par un élément de rappel élastique (17) dans une position désaccouplée de l'arbre d'entraînement (6).

7. Dispositif de changement d'outil selon l'une quelconque des revendications précédentes, **caractérisé en ce que** le dispositif de changement d'outil (1) présente un embrayage (16) par le biais duquel l'arbre d'outil (18) d'un outil (11, 12, 13, 14) se trouvant dans la position active (AP) peut être connecté par entraînement à l'arbre d'entraînement (6), l'embrayage (16) pouvant notamment être fermé par un déplacement d'un outil (11, 12, 13, 14) se trouvant dans la position active (AP) dans la direction du boîtier (5).

8. Dispositif de changement d'outil selon l'une quelconque des revendications précédentes, **caractérisé en ce que** le dispositif de changement d'outil (1) présente une fixation en position (15) qui fixe un outil (11, 12, 13, 14) dans la position active (AP) et/ou dans la position accouplée, la fixation en position (15) étant notamment réalisée de telle sorte qu'elle s'active automatiquement lors de la fermeture de l'embrayage (16) et/ou la fixation en position (15) étant réalisée sous forme de fermeture par encliquetage sollicitée par ressort.

9. Dispositif de changement d'outil selon l'une quelconque des revendications précédentes, **caractérisé en ce qu'**une force de retenue maximale et/ou une allure de la force de commande (F) du dispositif d'encliquetage (10) sont adaptées de telle sorte que des forces de réaction à attendre provenant d'un actionnement d'outil soient supportées et/ou que des forces de réaction résultant du poids d'un outil soient compensées.

10. Dispositif d'usinage comprenant un manipulateur à plusieurs axes (2), un dispositif de changement d'outil (1) guidé par le manipulateur et une commande (24), **caractérisé en ce que** le dispositif de changement d'outil (2) est réalisé selon l'une quelconque des revendications précédentes.

11. Dispositif d'usinage selon la revendication précédente, **caractérisé en ce que** la commande est réalisée de manière à commander le manipulateur pour effectuer un changement d'outil de telle sorte qu'un outil (11, 12, 13, 14) soit déplacé essentiellement tangentiellement au plan de rotation (E) du support de tourelle (9) vers un objet externe (23), le manipulateur (2) présentant notamment un système de capteur de force ou de couple et la force de retenue limitée (F) du dispositif d'encliquetage (10) étant notamment surmontée par le déplacement du manipulateur et une rotation du support de tourelle (9) autour de l'axe de tourelle (R) étant provoquée jusqu'à ce qu'un outil (11, 12, 13, 14) s'encliquète dans la position active (AP).

12. Dispositif d'usinage selon l'une quelconque des revendications précédentes, **caractérisé en ce que** la commande est réalisée de manière à commander le manipulateur de telle sorte que le dispositif de changement d'outil (1) soit déplacé avec un moyen de désactivation de la fixation en position (15) vers un objet externe (23) afin de désactiver la fixation en position (15).

13. Procédé de fonctionnement d'un manipulateur (2), en particulier d'un robot de construction légère ou d'un robot industriel, comprenant un dispositif de changement d'outil (1) selon l'une quelconque des revendications précédentes, le manipulateur (2) présentant un système de capteur de force ou de couple, le procédé de fonctionnement comprenant les étapes suivantes de réalisation d'un changement d'outil :
- commande du manipulateur (2) afin de déplacer le dispositif de changement d'outil (1), en particulier un outil actif (11), vers un objet externe (23), la direction de déplacement étant orientée par rapport au point de contact tangentiellement au plan de rotation (E) du support de tourelle (9) et le dispositif de changement d'outil (1) étant guidé autour de l'objet externe (23) afin de faire tourner le support de tourelle (9) par rapport au boîtier du dispositif de changement d'outil (1) ;
- détection, par le biais du système de capteur du manipulateur, de la force de retenue générée par le dispositif d'encliquetage (10) et/ou détection du fait qu'une force de commande (F) du dispositif d'encliquetage (10) est surmontée.

14. Procédé de fonctionnement pour réaliser un changement d'outil selon la revendication précédente, **caractérisé en ce que** l'atteinte et/ou le dépassement de la force de retenue maximale et/ou de son intensité sont détectés.

15. Procédé de fonctionnement pour réaliser un changement d'outil selon la revendication précédente, **caractérisé en ce que** pour les positions d'encliquetage de différents outils, différentes forces de retenue maximales sont établies et **en ce qu'**à partir de l'allure des forces de réaction détectées lors de la rotation du support de tourelle et notamment à partir de la position et/ou de l'intensité de la force de retenue maximale, on détecte quel outil se trouvait dans la position active au début de l'opération de changement.
